(19)

**Europäisches Patentamt**
**European Patent Office**
**Office européen des brevets**

(11) **EP 1 744 057 A1**

(12) **EUROPEAN PATENT APPLICATION**

(43) Date of publication:
17.01.2007 Bulletin 2007/03

(51) Int Cl.:
*F03D 1/04* (2006.01)    *F02C 1/02* (2006.01)

(21) Application number: 05425510.4

(22) Date of filing: **14.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Melone,, Savino**
**60131 Ancona (IT)**

(72) Inventor: **Melone,, Savino**
**60131 Ancona (IT)**

(74) Representative: **Faggioni, Marco et al**
**Pettenkoferstrasse 20-22**
**80336 Munich (DE)**

(54) **Wind energy generator with inlet duct**

(57)    SUMMARY
An Aeolian generator is described, comprising a manifold (1) and a turbine (4), fed by the air coming from the manifold (1). Its cross-section area is much larger at the inlet (2) than at the outlet (3).

Preferably, manifold (1) have a section with a sigmoid trend or built through rotating about the axis the curve R(x) = 2,25 cos (18x) + 2,75.

FIG. 1

EP 1 744 057 A1

**Description**

The present invention refers to an Aeolian generator, useful to produce energy, in particular electrical energy.

Energy production is a critical matter. In fact, energy consumption is more and more increasing and a further large increasing is foreseen for the future, when developing countries, which now have very low consumption, grow, becoming energy dependent. On the other hand, energy production increases pollution, due to the output of waste gases from stacks of power stations.

Nuclear power stations output no gas. Nevertheless, people living near to such stations are uncomfortable with them and there is a poor acceptation in the public opinion. Furthermore, radioactive wastes can be very armful and their disposal is a very big problem.

An increasing attention has been paid to alternative energy sources, among which Aeolian energy is one of the most important. A common Aeolian power station includes an airscrew formed by three wings, actuating an alternator, which produces electric energy.

Although such plants are increasingly interesting, their yield is presently very poor. Indeed, a single wing has a surface which is only about 5% of the whole surface of the circle crossed by the wing itself (CW). This implies that the energy transferred from the wind to the single wing in a determined time does not exceed 5% of the energy conveyed by the wind through the CW in the same time. Moreover, because of Betz's theorem, only 59.3% of such energy can be utilised. Therefore, only about 3% of the wind energy passing through the circle crossed by the wing itself can be transformed into electric energy by the single wing.

The above problems are brilliantly solved by the present invention, which relates to an Aeolian generator, comprising a manifold and a turbine, fed by the air coming from the manifold, characterised in that the cross-section area of the manifold is much larger at the inlet than at the outlet.

This invention is now described more in depth, referring to the annexed drawing, which illustrates a preferred embodiment, and wherein:

Fig. 1 is cross-section view of a manifold employed according to this invention; and
Fig. 2 is a principle diagram of this invention.

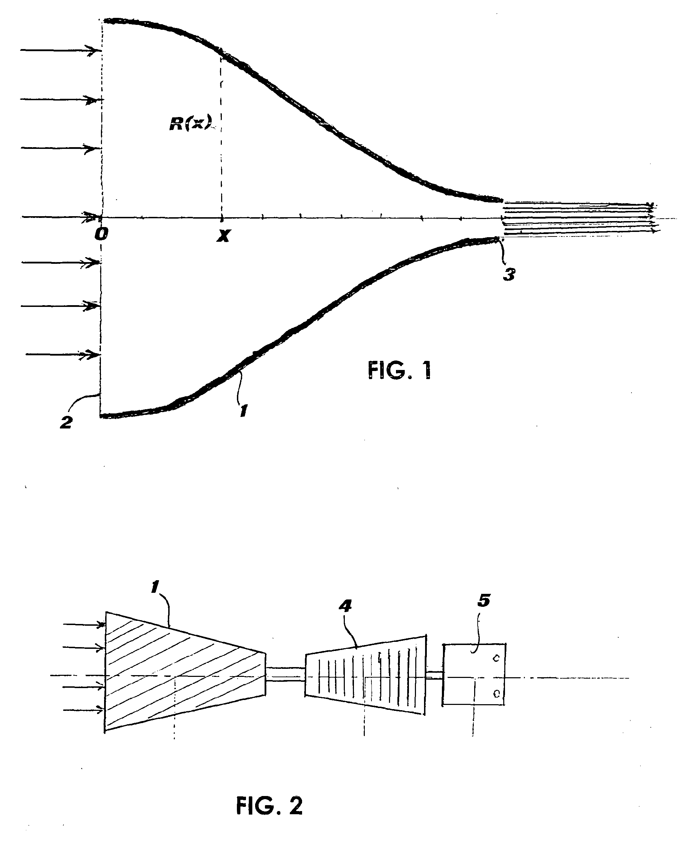

A manifold 1 to be used in the Aeolian generator according to this invention is shown in Fig. 1. As it is apparent, the section area at the inlet 2 is much larger than the section area at the outlet nozzle 3. Moreover, the inlet 2 and the outlet nozzle 3 are both parallel to the manifold axis. This is very important, since in this way air turbulence at the inlet 2 and at the outlet 3 is strongly reduced. This is the reason why a sigmoid trend is preferred for manifold 1 walls.

Fig. 2 shows a flow sheet of an inventive Aeolian generator. It is comprised of a manifold 1, a turbine 4 and an alternator 5, mechanically connected to the turbine 4.

Preferably, the manifold 1 is positioned in a place where wind is usually strong, in order to increase the collected energy. The manifold 1 is able to rotate, in order to put the section 2 in front of the wind. During the operation, air enters the inlet 2 of the manifold 1. Since air is a compressible fluid, its density increases as it flows from section 2 to the nozzle 3. This situation involves an adiabatic compression, which increases air temperature. Therefore, air goes out from nozzle 3 with higher temperature and pressure than when it enters. At the outlet 3, air exhibits virtually the same features as the vapour which usually operates turbines and can operate turbine 4, due to the acquired thermal energy which in the operation is employed. Turbine 4, in turn, operates the alternator 5, producing electric energy.

The manifold 1 can be seen as having its axis corresponding to the x axis in a x,y co-ordinate system. Air entering the manifold 1 compresses the air inside in an irregular way. In any case, it is sufficient to know average values of parameters involved.

Therefore:

$$\overline{\rho}(x) \ = \ 2\pi/S(x)\int_{0}^{R(x)}\rho(x,Y)\,y\,dy \quad \text{and} \quad \overline{v}(x) \ = \ 2\pi\int_{0}^{R(x)}v(x,y)\,y\,dy$$

where S(x) indicates the generic cross-section of the manifold 1.

All phenomena taking place in the manifold 1 must be interpreted on the basis of the law of mass and energy conservation, relevant to the air contained in the manifold.

Mass conservation of the air is expressed by the following equation:

$$\bar{\rho}(x)\bar{v}(x)S(x) \;=\; \rho o v o S o \qquad\qquad (1)$$

where po and vo respectively mean air density and flow rate in the inlet section So.

Energy conservation should take into account the loss due to a fluodynamic friction and to the transformation into heat by adiabatic compression. Fluodynamic friction can be calculated through Darcy-Weisbach equation, used to calculate the pressure drop in a fluid flowing in a tube having length L and diameter D:

$$\Delta P \;=\; -\alpha\rho v^2 L/2D$$

$\alpha$ being the fluodynamic friction coefficient. The latter depends on the regime of the motion. In order to determinate it, it is necessary to calculate Reynolds' number, corresponding to the physical conditions of moving air:

$$Re(x) \;=\; \bar{\rho}(x)\bar{v}(x)D/\eta$$

wherein $\eta$ is air dynamic viscosity. $\alpha$ can be attained through Moody's diagram with a sufficient approximation.

Accordingly, a calculation of the power loss due to fluodynamic friction along the path in the manifold 1 is possible:

$$\Delta W_{at(x)} \;=\; -[\alpha\pi/4]\int_0^x \rho(x)\bar{v}(x)^3 R(x)\,dx$$

wherein R(x) is the radius of the section at the distance x.

Power loss due to adiabatic compression can be calculated as follows:

$$\Delta W_{ad}(x) \;=\; -nC_v(T(x)-T_0)$$

Wherein n is the number of moles included in the air entering the manifold 1 in time unit, $C_v$ is the specific heat of air at constant volume, T(X) is the temperature of the air in the point x and $T_0$ is temperature of the air entering the manifold. Behaviour of the air in the manifold can be approximated to the one of a perfect gas, the physical properties of which are represented by the equations:

$$air\ at\ the\ point\ x: \qquad P(x)V(x) \;=\; nRT(X)$$

wherein R is the universal constant for gases.

The power loss due to the adiabatic compression can also be written as:

$$\Delta W_{ad}(x) \;=\; -(P(x)V(x)-P_0V_0)/(\gamma-1) \;=\; -[W(x)-W_0]/(\gamma-1)$$

Where $\gamma = C_p/C_v$

After few simple calculation, the equation corresponding the energy conservation ca be written as:

$$\bar{\rho}(x)\bar{v}(x)^3 R(x)^2 \;+\; \alpha[(\gamma-1)/2\gamma]\int_0^x \bar{\rho}(x)\bar{v}(x)^3 R(x)\,dx \;=\; \rho_0 v_0^3 R_0^2 \qquad (2)$$

The solution of an equation system of both (1) and (2) is:

$$\bar{\rho}(x) = \rho_0 R_0{}^2/R^2(x) \ \exp[+\alpha(\gamma-1)/4\gamma \ F(x)]$$

$$\bar{v}(x) = v_0 \exp[-\alpha(\gamma-1)/4\gamma \ F(x)]$$

Using these expressions, it is possible to obtain the ones relating to pressure and power at the point x in the manifold:

$$P(X) = P_0 \ [R_0{}^{2/}R(x)^2 \ \exp \ [-\alpha(\gamma-1)/4\gamma \ F(x)]$$

$$\text{power } W(x) = W_0 \ \exp \ [-\alpha(\gamma-1)/2\gamma \ F(x)]$$

wherein

$$F(x) = \int_0^x dx/R(x).$$

Fluodynamic friction and adiabatic compression are the only causes of power loss. It should be noted that both processes increase air temperature, according to:

$$T(x) = T_0 [V_0/V(x)]^{\gamma-1}$$

Since: $V_0 = \pi v(x)R(x)^2$, it is:

$$T(x) = T_0 \ (R_0/R(x))^{2(\gamma-1)} \ \exp \ [+(\gamma-1)^2/4\gamma \ F(x)]$$

A manifold embodiment can have the shape given by spinning the axis of a curve having as equation R(x) = 2,25 cos (18x) + 2,75. For instance, the section diameter is D = 10 m at the inlet 2 and d = 1 m at the outlet 3, with a length L = 10 m.
If the axis of the manifold has the same direction of a wind blowing with a speed of 14 m/s (about 50 km/h), volume of air entering the manifold 1 in the unit time is $V = \pi v_0 R_0{}^2 = 109\ 956\ m^3/s$, mass is $M = \rho_0 V = 1\ 319.47$ kg/s, pressure is $P_0 = (1/2)\rho_0 v_0{}^2 = 117.60$ Pa. Therefore, kinetic energy entering the manifold 1 in the unit time is $W_0 = (\pi/2) \rho_0 v_0{}^3 R_0{}^2 = 129.31$ kW. Using the formulae above, it is to find that at the inside of the manifold, near to the outlet 3 following features are got: v = 13.92 m/s, $\rho = 120.72$ kg/m$^3$, P = 11,689.97 Pa and T = 1663 °C.
Therefore, power transferred to the turbine is not only the one ejected through the nozzle in the unit time, but also heat, that is W = 127.77 kW.
So the total power loss is only $\Delta W_{tot} = W - W_0 = -1.54$ kW $\approx 0.01\ W_0$. Since the yield of an effective turbine can be circa 40%, the innovative Aeolian generator can supply a power $W_{inn} = 0.4 W_0 = 51$ kW. On the contrary, a traditional Aeolian generator having three wings with the same diameter of the inlet 2 can provide a power corresponding to: $W_{tr} = 0.09 W_0 = 11.61$ kW. Therefore, the inventive Aeolian generator is more than four times more performing.
It is therefore apparent that the Aeolian generator according to the invention is able to collect the whole wind energy, without moving components and to transfer it to a turbine, after having transformed air into a hot and dense fluid.

## Claims

1. Aeolian generator, comprising a manifold (1) and a turbine (4), fed by the air coming from the manifold (1), **characterised in that** the cross-section area of the manifold (1) is much larger at the inlet (2) than at the outlet (3).

**2.** Aeolian generator as claimed in claim 1), **characterised in that** the walls of the manifold (1) have a section with a sigmoid trend.

**3.** Aeolian generator according to any previous claim 1) or 2), **characterised in that** such a turbine (4) is connected to an alternator (5).

**4.** Aeolian generator as in any previous claim, **characterised in that** the manifold (1) is positioned in a place where wind is usually strong.

**5.** Aeolian generator as in any previous claim, **characterised in that** the manifold (1) is able to rotate, in order to put the inlet section (2) in front of the wind.

**6.** Aeolian generator as in any previous claim 3) to 5), **characterised in that** the shape of the wall of the manifold (1) is built through rotating about the axis the curve

$$R(x) = 2,25 \cos (18x) + 2,75.$$

**FIG. 1**

**FIG. 2**

**European Patent Office**

**EUROPEAN SEARCH REPORT**

Application Number

EP 05 42 5510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 504 911 A (MCLATCHY F) 22 March 1978 (1978-03-22) * page 2, line 3 - line 10 * * page 2, line 41 - line 49; figures 1,2 * ----- | 1,3,4 | F03D1/04 F02C1/02 |
| X | CA 2 330 700 A1 (STANTON, KEITH LESLIE) 15 July 2002 (2002-07-15) * the whole document * ----- | 1-5 | |
| X | FR 2 854 930 A (GAUCHER LOUIS CHARLES) 19 November 2004 (2004-11-19) * abstract; figure 1 * ----- | 1,3-5 | |
| X | US 3 339 078 A (CROMPTON GEORGE) 29 August 1967 (1967-08-29) * column 1, line 41 - line 50; figures * * column 1, line 62 - column 2, line 20 * * column 2, line 50 - line 62 * * column 3, line 42 - line 54 * * column 5, line 29 - line 33 * ----- | 1,3-5 | |
| X | GB 2 359 594 A (LEONARD THOMAS * VAUGHAN) 29 August 2001 (2001-08-29) * abstract; figures * * column 2, paragraph 3 * ----- | 1,3-5 | TECHNICAL FIELDS SEARCHED (IPC) F03D F02C |
| X | US 5 447 412 A (LAMONT ET AL) 5 September 1995 (1995-09-05) * abstract; figures 2,3,8,9,16 * ----- | 1-5 | |
| X | EP 0 935 068 A (GRASSMANN, HANS) 11 August 1999 (1999-08-11) * abstract; figures 2,3 * * paragraphs [0001], [0002], [0006] - [0014], [0024] - [0028], [0063] - [0065] * ----- -/-- | 1-4 | |

The present search report has been drawn up for all claims

| Place of search | Date of completion of the search | Examiner |
|---|---|---|
| The Hague | 24 November 2005 | de Rooij, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 744 057 A1**

**European Patent Office**

**EUROPEAN SEARCH REPORT**

Application Number

EP 05 42 5510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 006, no. 253 (M-178), 11 December 1982 (1982-12-11) & JP 57 148077 A (HITACHI SEISAKUSHO KK), 13 September 1982 (1982-09-13) * abstract *<br><br>----- | 1-5 | |
| | | | TECHNICAL FIELDS SEARCHED (IPC) |

The present search report has been drawn up for all claims

| Place of search | Date of completion of the search | Examiner |
|---|---|---|
| The Hague | 24 November 2005 | de Rooij, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

8

**EP 1 744 057 A1**

## ANNEX TO THE EUROPEAN SEARCH REPORT
## ON EUROPEAN PATENT APPLICATION NO.

EP 05 42 5510

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2005

| Patent document cited in search report | | Publication date | Patent family member(s) | | Publication date |
|---|---|---|---|---|---|
| GB 1504911 | A | 22-03-1978 | NONE | | |
| CA 2330700 | A1 | 15-07-2002 | NONE | | |
| FR 2854930 | A | 19-11-2004 | NONE | | |
| US 3339078 | A | 29-08-1967 | NONE | | |
| GB 2359594 | A | 29-08-2001 | NONE | | |
| US 5447412 | A | 05-09-1995 | CA 2128167 A1<br>US 5332354 A | | 16-01-1995<br>26-07-1994 |
| EP 0935068 | A | 11-08-1999 | IT UD980010 A1 | | 04-08-1999 |
| JP 57148077 | A | 13-09-1982 | NONE | | |

EPO FORM P0459

For more details about this annex : see Official Journal of the European Patent Office, No. 12/82